# EUROPEAN PATENT APPLICATION

(11) **EP 4 657 628 A1**
(43) Date of publication of application: **03.12.2025**
(21) Application number: 25170635.4
(22) Date of filing: 15.04.2025
(51) Int. Cl.: H01M 50/209, H01M 50/244, H01M 50/291

(54) **ELECTRICITY STORAGE PACK**

(30) Priority: 31.05.2024 JP 2024088468
(71) Applicant: Prime Planet Energy & Solutions, Inc., Chuo-ku, Tokyo 103-0022 (JP)
(72) Inventor: FUKUDA, Masaki, Tokyo, 103-0022 (JP); ICHIKAWA, Takaaki, Tokyo, 103-0022 (JP); YOSHIKANE, Taketoshi, Tokyo, 103-0022 (JP); SAITO, Masao, Tokyo, 103-0022 (JP)
(74) Representative: Kuhnen & Wacker Patent- und Rechtsanwaltsbüro PartG mbB

(57) **Abstract**

A herein disclosed electricity storage pack includes plural electric storage devices, a side frame that is arranged at an end part in a aligned direction, and a cover that is arranged to cover plural electric storage devices and at least a part of the side frame. Herein, the electricity storage pack includes a partition wall that is formed in a plate shape, that is arranged between the side frame and the electric storage devices, and that has a contact point where it comes into contact with the cover, includes a first adhesion agent that is arranged on a surface where the electric storage device and the cover are opposed to each other, and includes a second adhesion agent that is arranged on an area in which the side frame, the partition wall, and the cover are opposed to each other and which is isolated from the first adhesion agent.

## Description

### BACKGROUND

The present disclosure relates to an electricity storage pack.

Conventionally, for a power supply for driving automobiles, or the like, an electricity storage pack is widely used that includes plural electric storage devices in order to implement a high output. As a technique related to this, CN217361763U discloses a battery pack (the electricity storage pack) that includes a housing (a cabinet) and plural electric cells (electric storage devices) attached to an inside of this housing. The housing of the above described battery pack is provided with a groove and a guide tank which are configured to fill an adhesion agent. It describes that, by doing this, it is possible, while suppressing the adhesion agent from protruding to an outside, to implement an adhesion of the housing with a cover and an adhesion of the housing with the electric cells by the adhesion agent guided to the tank through the groove.

### SUMMARY

In the electricity storage pack, it is required to acquire different adhesive properties respectively for the adhesion of the electric storage device with the cabinet (for example, a side frame) and the adhesion of the cabinet (for example, the adhesion of the side frame with the cover). Accordingly, for these adhesions, different kinds of adhesion agents might be used. In a case where the different kinds of the adhesion agents are used, the different kinds of adhesion agents are mixed together at the time of assembly of the electricity storage pack, and thus there are some fears of reducing performances of respective adhesion agents.

The present disclosure has an object to provide an electricity storage pack that can prevent the different kinds of adhesion agents from being mixed together.

A herein disclosed electricity storage pack includes plural electric storage devices that include box-shaped cases and are aligned along a predetermined aligned direction, a side frame that is arranged at an end part in the aligned direction, and a cover that is arranged to cover the plural electric storage devices and at least a part of the side frame. Here, the electricity storage pack includes a partition wall that is arranged between the side frame and the electric storage devices, that is formed in a plate shape, and that includes a contact point configured to come into contact with the cover, includes a first adhesion agent that is arranged at a surface on which the electric storage devices and the cover are opposed to each other, and includes a second adhesion agent that is arranged on an area in which the side frame, the partition wall, and the cover are opposed to each other and which is isolated from the first adhesion agent.

According to the configuration described above, by including the partition wall having the contact point configured to come into contact with the cover between the side frame and the electric storage device, the second adhesion agent is arranged on an area isolated from the first adhesion agent. In addition, by the partition wall having the above described configuration, it is possible to prevent the second adhesion agent from invading toward a direction of the first adhesion agent, and similarly, it is possible to prevent the first adhesion agent from invading toward a direction of the second adhesion agent. Accordingly, it is possible to prevent the first adhesion agent and the second adhesion agent from being mixed together.

### BRIEF DESCRIPTION OF THE DRAWINGS

FIG. 1 is a perspective view that schematically shows an electricity storage pack in accordance with one embodiment.
FIG. 2 is a perspective view that schematically shows an electric storage device in accordance with one embodiment.
FIG. 3 is an exploded view that schematically shows a cabinet in accordance with one embodiment.
FIG. 4 is a partially enlarged cross section view that schematically shows an inside of the electricity storage pack in accordance with one embodiment.
FIG. 5 is a FIG. 4 correspondence diagram that is for explaining a situation in which a bottom cover in accordance with one embodiment is assembled.

### DETAILED DESCRIPTION

Below, while referring to drawings, some of preferred embodiments for a herein disclosed technique will be explained. Incidentally, the matters other than matters particularly mentioned in this specification, and required for practicing the present disclosure (for example, a general configuration and manufacture process of an electric storage device which do not characterize the herein disclosed technique) can be grasped as design matters of those skilled in the art based on the related art in the present field. The herein disclosed technique can be executed based on the contents disclosed in the present specification, and on the technical common sense in the present field. Incidentally, a wording "A to B (here, A and B are arbitrary values)" representing a range in the present specification means "equal to or more than A and not more than B", and semantically covers meanings of "more than A and less than B", "more than A and not more than B", and "equal to or more than A and less than B".

Incidentally, the wording "electric storage device" in the present specification means a device that can perform electrically charging and electrically discharging. The electric storage device semantically covers a battery, such as primary battery and secondary battery (for example, a lithium ion secondary battery, and a nickel hydrogen battery), and a capacitor (a physical battery), such as electric double layer capacitor.

Incidentally, in explanation described below, reference signs L, R, F, Rr, U, and D in drawings respectively represent left, right, front, rear, up, and down. In addition, a reference sign X in drawings represents a short side direction of an electricity storage pack 500 and a thickness direction of the electric storage device 100. A reference sign Y in drawings represents a long side direction of the electricity storage pack 500 orthogonal to the short side direction, and a width direction of the electric storage device 100. A reference sign Z in drawings represents an up and down (height) directions of the electricity storage pack 500 and the electric storage device 100. The short side direction X is further an aligned direction of the electric storage devices 100, and is furthermore a thickness direction of the electric storage device 100. However, these are merely directions for convenience sake of explanation, and are not intended to restrict the disposed form of the electric storage device 100 and the electricity storage pack 500.

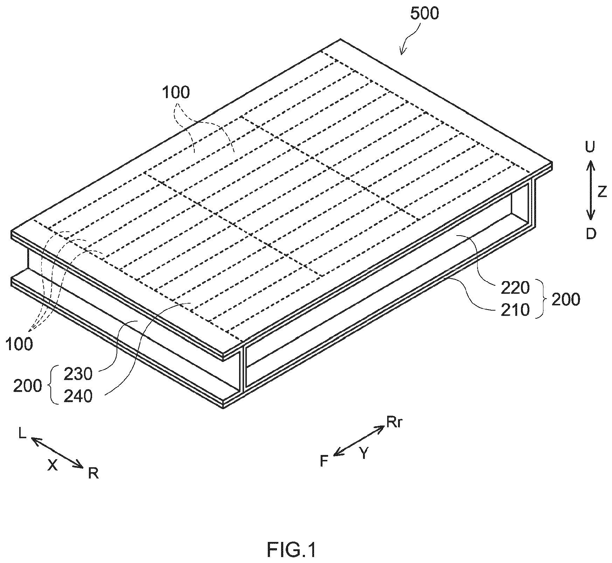

FIG. 1 is a perspective view that schematically shows the electricity storage pack 500 in accordance with one embodiment. Incidentally, for convenience sake of explanation, in FIG. 1, an illustration of a configuration in which the electric storage device 100 is excluded, among configurations at the inside of the electricity storage pack 500 (a cabinet 200), is omitted. Similarly, in FIG. 1, for convenience sake of explanation, illustration of the positive electrode terminal 30 and the negative electrode terminal 40 of the electric storage device 100 is omitted. The electricity storage pack 500 includes plural electric storage devices 100, a side frame 220, and a bottom cover 210. Here, furthermore, the electricity storage pack 500 includes an end frame 230 and a top cover 240. Incidentally, the bottom cover 210 is an example of "a cover arranged to cover the electric storage device and at least a part of the side frame" in the present specification.

The electricity storage pack 500 includes plural electric storage devices 100 that are aligned along a predetermined direction. In particular, they are aligned to make surfaces (here, first side walls 12b) of adjacent electric storage devices 100 in the thickness direction X be opposed to each other. In other words, here, plural electric storage devices 100 are aligned (laminated) along the X direction. As shown by FIG. 1, in the present embodiment, plural electric storage devices 100 are aligned in plural rows (3 rows). However, a number of the electric storage devices 100 and a number of rows in which the electric storage devices are aligned are not restricted to an aspect disclosed by FIG. 1, and can be suitably changed. For example, the electric storage devices 100 might be aligned in 1 row, 2 rows, or 4 or more rows. The electricity storage pack 500 in accordance with the present embodiment has a so-called Cell-to-Pack structure in which plural electric storage devices 100 are accommodated without configuring an electric storage module, or the like.

In addition, although illustrations are omitted, the plural electric storage devices 100 can be electrically connected by an electrically conductive member, such as bus bar. The bus bar is electrically connected to a positive electrode terminal 30 or a negative electrode terminal 40 of each electric storage device 100. At that time, the bus bar might connect the plural electric storage devices 100 in series or in parallel, or might connect the electric storage devices 100 in a multi-series multi-parallel manner.

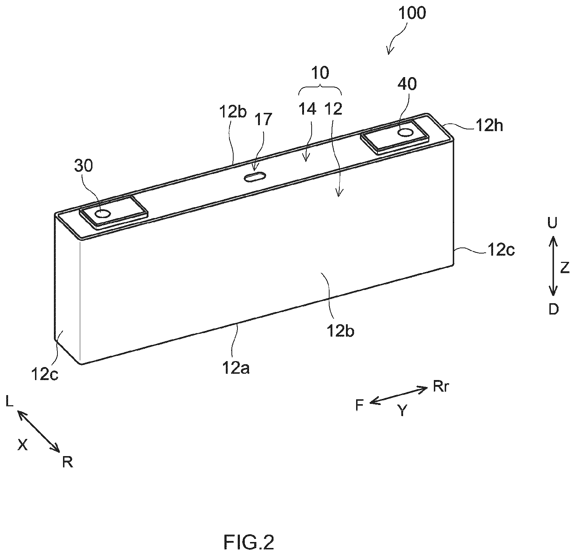

FIG. 2 is a perspective view that schematically shows the electric storage device 100 in accordance with one embodiment. The electric storage device 100 is, for example, a lithium ion secondary battery, and includes a box-shaped case 10, a positive electrode terminal 30, and a negative electrode terminal 40. Incidentally, shapes and sizes of the plural electric storage devices 100 can be suitably changed without being restricted to an aspect disclosed by FIG. 2.

The box-shaped case 10 is a case that is configured to accommodate an electrode body (not shown in drawings) and a nonaqueous electrolyte (not shown in drawings). As shown in FIG. 2, the box-shaped case 10 has an outer shape that is a flat and bottomed hexahedron shape (a square shape). A material of the box-shaped case 10 might be the same as a material conventionally used, and is not particularly restricted. The box-shaped case 10 is preferably made of metal, or, for example, is further preferably made from aluminum, aluminum alloy, iron, iron alloy, or the like. As shown in FIG. 2, the box-shaped case 10 herein includes an outer case 12 that has an opening 12h, and includes a sealing plate (a lid) 14 that is configured to seal the opening 12h.

The outer case 12 includes, as shown in FIG. 2, a bottom part 12a, a pair of first side walls 12b that are configured to extend from the bottom part 12a and opposed mutually, and a pair of second side walls 12c that are configured to extend from the bottom part 12a and opposed mutually. The bottom part 12a is formed in an approximately rectangular shape. The bottom part 12a is opposed to the opening 12h. The first side wall 12b is flat. The first side wall 12b is configured to extend from a long side of the bottom part 12a. The second side wall 12c is configured to extend from a short side of the bottom part 12a. In a plane view, here, an area size of the first side wall 12b is larger than an area size of the second side wall 12c.

The sealing plate 14 is attached to the outer case 12 to cover the opening 12h of the outer case 12. The sealing plate 14 is configured to be opposed to the bottom part 12a of the outer case 12. The sealing plate 14 is approximately rectangular in a plane view. The sealing plate 14 is provided with a thin-walled safe valve 17 that is set to release an internal pressure of the box-shaped case 10 when the internal pressure is increased to reach a predetermined level or more, and provided with an injection port (not shown in drawings) that is for injecting the nonaqueous electrolyte. The box-shaped case 10 is integrated by joining (preferably, welding and joining) the sealing plate 14 to a peripheral edge of the opening 12h of the outer case 12. The box-shaped case 10 is airtightly sealed (hermetically sealed). Incidentally, the wording "approximately rectangular shape" in the present specification is used as a term that semantically covers not only a completely rectangular shape (an oblong shape) but also, for example, a shape whose corner part connecting a long side and a short side of the rectangular shape is an R shape, a shape including a notch at the corner part, or the like.

On the box-shaped case 10, the positive electrode terminal 30 and the negative electrode terminal 40 are provided. Here, the positive electrode terminal 30 and the negative electrode terminal 40 are provided on the sealing plate 14. One of end parts of the positive electrode terminal 30 is electrically connected by the electrically conductive member, such as bus bar, at an outside of the box-shaped case 10. The other one of the end parts of the positive electrode terminal 30 is electrically connected to a positive electrode of the electrode body at an inside of the box-shaped case 10. One of end parts of the negative electrode terminal 40 is electrically connected by the electrically conductive member, such as bus bar, at an outside of the box-shaped case 10. The other one of the end parts of the negative electrode terminal 40 is electrically connected to a negative electrode of the electrode body at the inside of the box-shaped case 10.

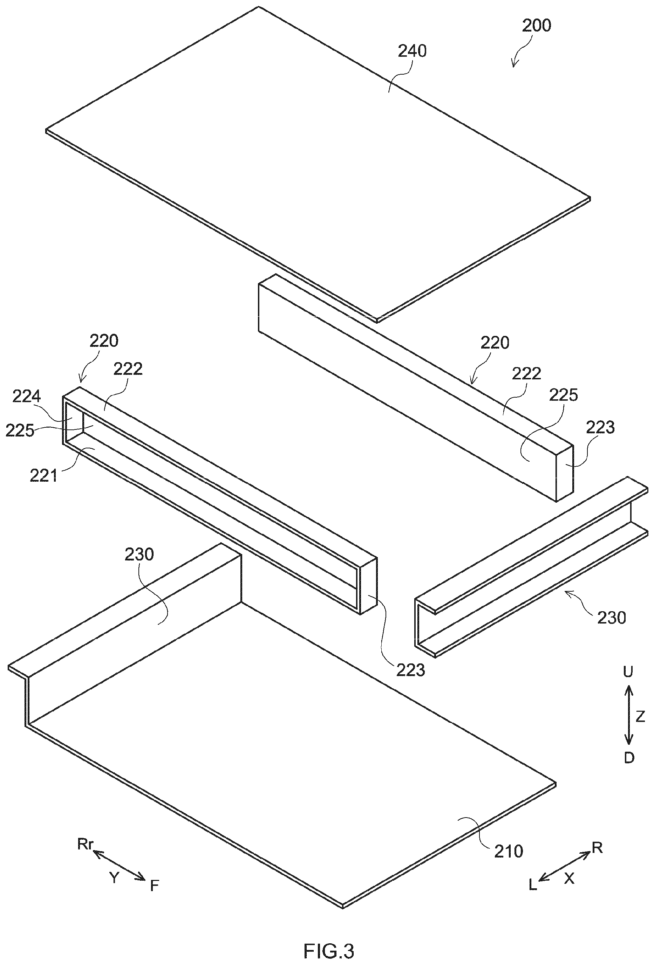

FIG. 3 is an exploded view that schematically shows the cabinet 200 in accordance with one embodiment. The cabinet 200 is configured to accommodate the plural electric storage devices 100 at an inside of the housing. As shown in FIG. 3, the cabinet 200 includes a bottom cover 210, a side frame 220, an end frame 230, and a top cover 240. Each of the above described members configuring the cabinet 200 becomes a skeleton for holding the electric storage device 100.

The bottom cover 210 herein configures a bottom surface of the electricity storage pack 500. The bottom cover 210 is arranged to cover the plural electric storage devices 100 and at least a part of the side frame 220 (as described in detail, it is a first flange part 221). On the bottom cover 210, the plural electric storage devices 100 are arranged. Specifically, the bottom part 12a of the electric storage device 100 and the bottom cover 210 are arranged via a first adhesion agent 410. Thus, the electric storage device 100 is fixed on the bottom cover 210. In addition, it is possible at a time of using the electricity storage pack 500 to conduct heat generated by the electric storage device 100 to the bottom cover 210 through the bottom part 12a. Incidentally, to the bottom cover 210, it is possible to attach, for example, a cooling mechanism, or the like.

The side frame 220 is a member that is arranged at an end part in the aligned direction (an X direction) of the electric storage devices 100. As shown in FIG. 3, the side frame 220 includes a base part 225, and includes the first flange 221 part, a second flange part 222, a third flange part 223, and a fourth flange part 224 that are configured to extend from respective end parts of the base part 225. The first flange part 221 and the second flange part 222 of the side frame 220 are arranged to be opposed to each other. In addition, the third flange part 223 and the fourth flange part 224 of the side frame 220 are arranged to be opposed to each other. As shown in FIG. 1, here, a pair of side frames 220 are arranged at respective end parts in the aligned direction (the X direction) of the electric storage devices 100. Thus, the electric storage device 100 is sandwiched in the aligned direction.

The end frame 230 is a member that is arranged in a direction (a Y direction) orthogonal to the aligned direction of the electric storage devices 100. As shown in FIG. 1, here, a pair of end frames 230 are arranged respectively at the end parts in the direction (the Y direction) orthogonal the aligned direction of the electric storage devices 100. Thus, the electric storage device 100 and the side frame 220 are sandwiched in the direction orthogonal to the aligned direction. In the present embodiment, one (a rear side in FIG. 3) of the end frames 230 is integrated with a bottom cover 210. However, the present disclosure is not restricted to this, and in some embodiments, the end frame 230 and the bottom cover 210 are members configured to be independent from each other.

The top cover 240 configures an upper part of the cabinet 200. The top cover 240 is arranged to cover the side frame 220 and the end frame 230. The top cover 240 is opposed to the bottom cover 210. The top cover 240 herein is an approximately rectangular in a plane view.

The cabinet 200 is airtightly sealed (hermetically sealed) by making the bottom cover 210, the side frame 220, the end frame 230, and the top cover 240 be joined to each other. In the present embodiment, the join described above is performed with a second adhesion agent 420 described later. By doing this, it is possible to prevent water, or the like, from invading to the inside of the electricity storage pack 500 (the cabinet 200) when the electricity storage pack 500 is being used.

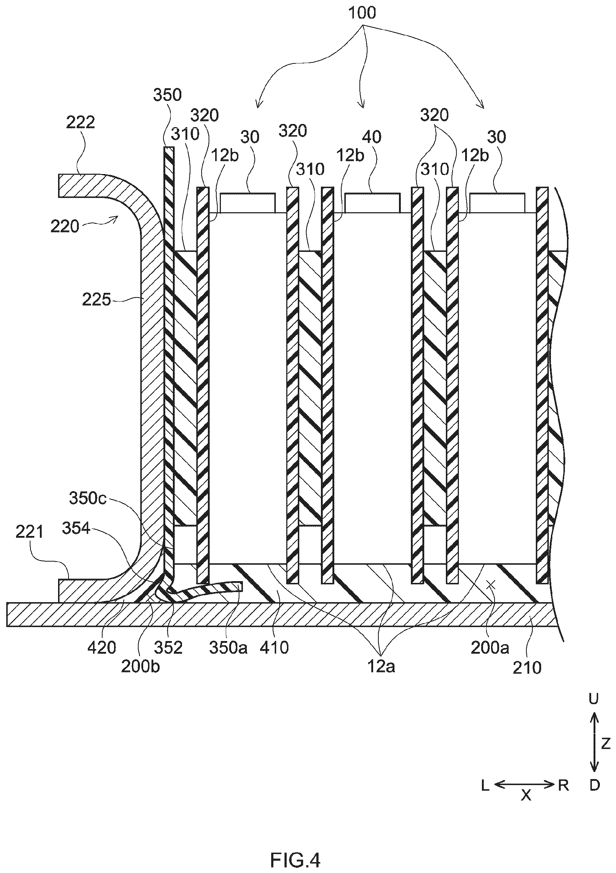

FIG. 4 is a partially enlarged cross section view that schematically shows the inside of the electricity storage pack 500 in accordance with one embodiment. More specifically, in FIG. 4, a vicinity of the side frame 220 at a left side (an L side) of the inside of the electricity storage pack 500 is schematically shown. Incidentally, for convenience sake of explanation, illustrations of the top cover 240 are omitted in FIG. 4.

As shown in FIG. 4, in the electricity storage pack 500 according to the present embodiment, a spacer 310 is arranged between the adjacent electric storage devices 100. More specifically, the spacer 310 is arranged between adjacent separators 320 (or, between a partition wall 350 and the separator 320). Here, the spacer 310 can contribute in uniforming restriction pressure on opposed surfaces of the adjacent electric storage devices 100. The spacer 310 can be configured with, for example, a resin material. As the resin material, it is possible to use, for example, a natural rubber, a synthetic rubber, a silicone resin, a urethane resin, or the like. Incidentally, the spacer 310 is not an essential configuration.

As shown in FIG. 4, in the electricity storage pack 500 according to the present embodiment, the separator 320 is arranged between the spacer 310 and the electric storage device 100. The separator 320 is configured to establish an insulation between the adjacent electric storage devices 100. The separator 320 can be configured with, for example, a resin material. As the resin material, it is possible to use, for example, polycarbonate, or the like. Incidentally, the separator 320 is not an essential configuration.

In a situation where the separator 320 is arranged on the electricity storage pack 500, from a perspective of facilitating the assembly of the bottom cover 210 with the side frame 220, it is preferable that a height of the separator 320 is equal to a height of the side frame 220 or smaller (lower) than the side frame 220. In other words, it is preferable to arrange so as to position the end part of the separator 320 at a site closer to a U side more than the first flange part 221 of the side frame 220.

The herein disclosed electricity storage pack 500 is characterized by including the partition wall 350. The partition wall 350 is a plate-shaped member that is configured to isolate the first adhesion agent 410 and the second adhesion agent 420 from each other so as to suppress them from being mixed. As shown in FIG. 4, the partition wall 350 is arranged between a base surface 250 of the side frame 220 and a first side wall 12b of the electric storage device 100. The partition wall 350 includes a contact point 352 where the bottom cover 210 comes into contact with the partition wall 350. Thus, a second area 200b is defined where the side frame 220, the bottom cover 210, and the partition wall 350 are opposed to each other.

As the partition wall 350, it is possible to suitably use a flexible resin material that can be deformed in response to an external force. As the resin material, for example, it is possible to suitably use polycarbonate, or the like, but the resin material is not restricted to this.

A thickness of the partition wall 350 is preferably at least equal to or more than 0.15 mm, or further preferably equal to or more than 0.2 mm. By making the partition wall 350 have a sufficient thickness, it is possible to suppress the first adhesion agent 410 and/or the second adhesion agent 420 from coming over the partition wall 350. Thus, it is possible to suitably suppress the first adhesion agent 410 and the second adhesion agent 420 from being mixed. On the other hand, an upper limit of the thickness of the partition wall 350 is not particularly restricted, however from a perspective of a size restriction required for the electricity storage pack 500, it is, for example, equal to or less than 1.0 mm or preferably equal to or less than 0.5 mm.

A Young's modulus of the partition wall 350 is preferably equal to or more than 2400 MPa, or further preferably equal to or more than 3000 MPa. On the other hand, an upper limit of the Young's modulus of the partition wall 350 is not particularly restricted, but it is, from a perspective of optimization of a press load of the side frame 220 at a manufacture time, for example, equal to or less than 5000 MPa, or preferably equal to or less than 4000 MPa. Incidentally, "Young's modulus" in the present specification can be measured with a conventionally known device by a method defined in JIS K 7161-1:2014.

It is preferable from a perspective of suppressing the first adhesion agent 410 and the second adhesion agent 420 from being mixed together that a width of the partition wall 350 corresponding to a width direction (the Y direction) of the side frame 220 is wider than a width of the provided first adhesion agent 410. In the width direction (the Y direction) of the side frame 220, when the width of the provided first adhesion agent 410 is treated as 100%, a width of the partition wall 350 is, for example, preferably equal to or more than 103% or preferably equal to or less than 130%.

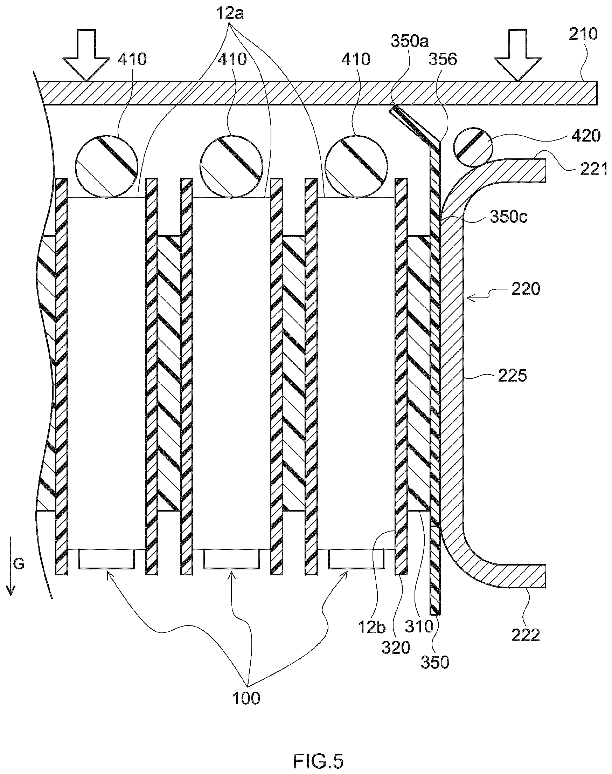

An end part 350a of the partition wall 350 might be arranged between a surface (specifically, the bottom part 12a) of the box-shaped case 10 of the electric storage device 100 and the bottom cover 210, or might be arranged between the side frame 220 (the first flange part 221) and the bottom cover 210. As shown in FIG. 5, here, the end part 350a of the partition wall 350 is arranged between the surface (specifically, the bottom part 12a) of the box-shaped case 10 of the electric storage device 100 and the bottom cover 210. Thus, it is possible to further enhance an adhesive property of the bottom cover 210 with the side frame 220 by the second adhesion agent 420. Incidentally, the end part 350a of the partition wall 350 is an example of "an end part closer to the contact point of the partition wall" in the present specification.

In the present embodiment, the partition wall 350 further includes a bent part 354, in addition to the contact point 352. As shown in FIG. 4, the bent part 354 is arranged between the contact point 352 and a contact part 350c, which is a portion where the partition wall 350 and the side frame 220 come into contact with each other. Here, the bent part 354 is bent in a direction where the first adhesion agent 410 is arranged (a right direction of FIG. 4, in other words, a first area 200a side). At that time, by forming (bending) the bent part 354, a repulsion force is caused in a direction opposite to the partition wall 350 bent direction (a left direction of FIG. 4, in other words, a second area 200b side). The repulsion force described above works as a reaction force making resistance to a force of the first adhesion agent 410 invading to the second adhesion agent 420 side (the second area 200b side). Accordingly, it is possible to further suitably suppress the first adhesion agent 410 and the second adhesion agent 420 from being mixed together. Incidentally, the bent part 354 might be bent to a direction in which the second adhesion agent 420 is arranged (the second area 200b side). According to the configuration described above, it is possible to suitably suppress the second adhesion agent 420 from invading to the first adhesion agent 410 side. In addition, the bent part 354 is not essential.

Another end part of the partition wall 350 (an end part arranged at a vicinity of the top cover 240) might be provided at a lower side than the second flange part 222 of the side frame 220. In other words, it is not always required to make the partition wall 350 come into contact with the top cover 240 (to provide the contact point).

Although not restricted to this, the present embodiment includes the partition wall 350, which is attached to the base part 225 of the side frame 220. In some embodiments, it is preferable that the partition wall 350 is attached to the side frame 220. According to the configuration described above, it is possible to suppress a shift of a position of the partition wall 350. By doing this, it is possible to further suitably suppress the first adhesion agent 410 and the second adhesion agent 420 from being mixed together. A way of attaching the side frame 220 and the partition wall 350 is not particularly restricted, but it is preferable to completely fix (attach) the side frame 220 and the partition wall 350 and then to arrange the first adhesion agent 410 and the second adhesion agent 420.

As shown in FIG. 4, the herein disclosed electricity storage pack 500 includes the first adhesion agent 410 that is arranged on a surface where the electric storage device 100 (the bottom part 12a) and the bottom cover 210 are opposed to each other. In other words, the first adhesion agent 410 is arranged on the first area 200a being an area where the electric storage device 100 (the bottom part 12a) and the bottom cover 210 are opposed to each other. Herein, the first adhesion agent 410 is arranged along the width direction (the Y direction) of the electric storage device 100. By the first adhesion agent 410, the electric storage device 100 and the bottom cover 210 are fixed. Thus, at the time of using the electricity storage pack 500, it is possible to suppress the electric storage device 100 from moving at the inside of the cabinet 200 due to a vibration or an impact. In addition, by fixing the electric storage device 100 and the bottom cover 210, it is possible to suitably conduct a heat of the electric storage device 100 (here, the bottom part 12a) to the bottom cover 210. Additionally, in the present embodiment, the first adhesion agent 410 has a role as an insulating member configured to establish an insulation between the electric storage device 100 and the bottom cover 210.

As the first adhesion agent 410, it is possible to use an adhesion agent for a structure application, for a heat conduction application, for an insulation application, or for a sealing application, or to use an adhesion agent in which two or more applications described above are compounded. In the present specification, the wording "adhesion agent for a structure application" represents a reliable adhesion agent that can bear a heavy load for a long period (see "JIS K 6800"). As one example of the adhesion agent for the structure application, it is possible to suitably use, for example, an epoxy resin type adhesion agent. Although the epoxy resin type adhesion agent might be one-pack type or two-pack type, it is preferably to be the one-pack type from a perspective of handling. As the one-pack type epoxy type adhesion agent, it is possible to use, for example, a bisphenol type epoxy resin, a hydrogenated bisphenol type epoxy resin, or the like.

An application amount of the first adhesion agent 410 can be suitably changed, based on a kind of the used adhesion agent. From a perspective of sufficiently securing the adhesive property of the bottom cover 210 with the electric storage device 100, regarding the application amount of the first adhesion agent 410, application is performed to make the thickness after the manufacture (after the assembly of the bottom cover 210) with respect to the bottom part 12a of the electric storage device 100, for example, be equal to or more than 0.5 mm, or preferably to make the thickness be equal to or more than 1 mm. On the other hand, the application amount of the first adhesion agent 410 is not particularly restricted, but the application might be performed from a perspective of a cost aspect, or the like, to make the thickness, for example, equal to or less than 5 mm, or preferably to make the thickness be equal to or less than 4 mm.

A viscosity of the first adhesion agent 410 is preferably equal to or less than 460 Pa·s, or further furthermore preferably equal to or less than 300 Pa·s. By doing this, the first adhesion agent 410 is suitably deformed, and thus the adhesion of the bottom cover 210 with the electric storage device 100 is facilitated. A lower limit of the viscosity of the first adhesion agent 410 is not particularly restricted, but might be from a perspective of a workability, for example, equal to or more than 50 Pa·s, or preferably equal to or more than 100 Pa·s. Incidentally, the term "viscosity" in the present specification means a viscosity (Pa·s) that is measured with a commercially available rheometer at measurement temperature 25°C by a shearing speed 10 to 600 s⁻¹.

As shown in FIG. 4, the herein disclosed electricity storage pack 500 includes the second adhesion agent 420 that is arranged on the second area 200b being an area in which the side frame 220, the bottom cover 210, and the partition wall 350 are opposed to each other. By the configuration described above, the side frame 220 and the bottom cover 210 are adhered, and further a gap between the side frame 220 and the bottom cover 210 is filled with the second adhesion agent 420. Here, the second adhesion agent 420 is arranged along the width direction (the Y direction) of the electric storage device 100. In addition, the second adhesion agent 420 is arranged on an area isolated from the first adhesion agent 410.

In the present embodiment, the second adhesion agent 420 is used to adhere each of the bottom cover 210, the side frame 220, the end frame 230, and the top cover 240, so as to assemble the cabinet 200. By doing this, the inside of the cabinet 200 is sealed (hermetically sealed).

As the second adhesion agent 420, one being different from the first adhesion agent 410 is used. As the second adhesion agent 420, it is possible to use an adhesion agent for a sealing application, for a structure application, for a heat conduction application, or for an insulation application, or to use an adhesion agent in which two or more applications described above are compounded. Among them, from a perspective of suitably sealing (hermetically sealing) the inside of the cabinet 200, it is possible to suitably use the adhesion agent for the sealing application. As one example of the adhesion agent for the sealing application, it is possible to use, for example, a modified silicone type adhesion agent.

A viscosity of the second adhesion agent 420 is preferably equal to or less than 460 Pa·s, or furthermore preferably equal to or less than 300 Pa·s. By doing this, the second adhesion agent 420 is suitably deformed, and thus the adhesion of the bottom cover 210 with the side frame 220 is facilitated. A lower limit of the viscosity of the second adhesion agent 420 is not particularly restricted, but might be from a perspective of a workability, for example, equal to or more than 200 Pa·s, or preferably equal to or more than 250 Pa·s.

An application amount of the second adhesion agent 420 can be suitably changed, based on a kind of the used adhesion agent. From a perspective of sufficiently securing the adhesive property of the bottom cover 210 with the side frame 220, regarding the application amount of the second adhesion agent 420, an application diameter is, for example, equal to or more than 1.5 mmφ, or the application diameter is preferably equal to or more than 2.0 mmφ. On the other hand, the application amount of the second adhesion agent 420 is not particularly restricted, and the application diameter is, for example, equal to or less than 5 mmφ, or the application diameter is preferably equal to or less than 3 mmφ.

FIG. 5 is a FIG. 4 correspondence diagram that is for explaining a situation in which the bottom cover 210 in accordance with one embodiment is assembled. In FIG. 5, for convenience sake of explanation, up and down (in the Z axis direction) are reversed and a gravity direction G is shown. Additionally, in FIG. 5, illustrations of the top cover 240 are omitted.

As shown in FIG. 5, here, the bottom part 12a of the electric storage device 100 and the first flange part 221 of the side frame 220 are mounted to be directed upward in the gravity direction G. Then, the first adhesion agent 410 is arranged on the bottom parts 12a of the plural electric storage devices 100. On the other hand, the second adhesion agent 420 is arranged on the first flange part 221 of the side frame 220. Incidentally, as the illustration is omitted, in the present embodiment, the second adhesion agent 420 is arranged on the area, of the end frame 230, being opposed to the bottom cover 210. In a state described above, the bottom cover 210 is arranged to cover the plural electric storage devices 100, the first flange part 221 of the side frame 220, and the end frame 230. Then, from an outer surface of the bottom cover 210, the bottom cover 210 is pressed in a vertical direction (a white arrow direction of FIG. 5) with respect to the first flange part 221 of the side frame 220. By the press force described above, a shape of the first adhesion agent 410 is changed (in other words, crushed), and thus the bottom part 12a of the electric storage device 100 and the bottom cover 210 are adhered. By doing this, the electric storage device 100 and the bottom cover 210 are fixed. Similarly, by the force pressing the bottom cover 210 (the white arrow direction in FIG. 5), a shape of the second adhesion agent 420 is changed and thus the side frame 220 (the first flange part 221) and the bottom cover 210 are adhered. Along with that, the gap between the first flange part 221 and the bottom cover 210 is filled with the second adhesion agent 420.

By the way, in a situation of a conventional electricity storage pack that does not include the partition wall, when different kinds of the adhesion agents are used as described above to assemble the electricity storage pack, at the time of pressing the bottom cover, the adhesion agent deformed by the press force often invades to an area where the other adhesion agent is arranged. By the invasion described above, the different adhesion agents are often mixed together. By doing this, there are some fears that a performance of each adhesion agent (for example, decrease in the adhesive property, an elongation rate, or a volume resistance rate, or the like) is changed so as to spoil each function. For example, there are some fears of causing an inconvenience that an adhesion strength of the electric storage device with the bottom cover becomes insufficient and then the electric storage device moves at the inside of the electricity storage pack due to a vibration at the time of using the electricity storage pack, or the like. In addition, there are some fears of causing an inconvenience that a sealability of the bottom cover with the side frame is spoiled and then water or the like invades to the inside of the electricity storage pack, or the like.

With respect to this, the herein disclosed electricity storage pack 500 includes the partition wall 350 that is arranged between the side frame 220 and the electric storage device 100. According to the configuration described above, the bottom cover 210 and the partition wall 350 come into contact with each other when the bottom cover 210 is pressed, and thus the contact point 352 is formed. By doing this, it prevents the first adhesion agent 410 from invading over the partition wall 350 to the second area 200b. At the same time, it prevents the second adhesion agent 420 from invading over the partition wall 350 to the first area 200a. In other words, according to the electricity storage pack 500 having the above described configuration, it is possible to suppress the first adhesion agent 410 and the second adhesion agent 420 from being mixed together.

In addition, the electricity storage pack 500 of the present disclosure is provided with the partition wall 350, and thus it is not required to further provide a groove that is configured to guide the adhesion agent, or the like. Therefore, as a side effect of the electricity storage pack 500 of the present disclosure, it is thought that the electricity storage pack can be downsized.

In addition, as shown by FIG. 5, the partition wall 350 of the present embodiment includes a bending point 356. Specifically, the end part 350a of the partition wall 350 is bent toward the side frame 220 side to be oriented toward the electric storage device 100 side. In addition, the bending point 356 is a portion corresponding to the contact point 352 after the bottom cover 210 is assembled (FIG. 4). In addition, the end part 350a of the partition wall 350 is arranged closer to the bottom cover 210 side than the bending point 356. In other words, as shown by FIG. 5, it is configured to make an angle defined by a surface from the end part 350a of the partition wall 350 to the bending point 356 and a surface from the bending point 356 to the other end part of the partition wall 350 become an obtuse angle. According to the configuration described above, it is possible at the time of assembling the bottom cover 210 to suitably adjust positions at which the contact point 352 of the partition wall 350 and the end part 350a are respectively arranged. Additionally, in a situation where the partition wall 350 is provided with the bending point 356, it is preferable that the bending point 356 is arranged at a position closer to the first flange part 221 of the side frame 220. By doing this, the bent part 354 is formed at the time of assembling the bottom cover 210. However, a shape of the partition wall 350 before the bottom cover 210 is assembled is not restricted to the above described aspect.

For example, regarding the partition wall 350 formed in the above described shape, at the time of pressing the bottom cover 210, firstly, the bottom cover 210 and the end part 350a of the partition wall 350 come into contact with each other. By doing this, a stress is transmitted to the partition wall 350, and then a deformation of the partition wall 350 is started with the bending point 356 functioning as the canter. Then, the bending point 356 and the bottom cover 210 come into contact with each other, so as to form the contact point 352. By doing this, a press force directed in a press direction of the bottom cover 210 (a white arrow in FIG. 5) is transmitted to the partition wall 350 through the bending point 356. By the press force described above, a bending moment is generated so as to form the bent part 354. By doing as described above, the contact point 352 and the bent part 354 are formed on the partition wall 350. However, this is merely an example.

Although the electricity storage pack 500 can be used for various applications, it can be suitably used, for example, as a power source for a motor mounted on a vehicle, such as passenger car and truck (driving power supply). Although a type of the vehicle is not particularly restricted, it might be, for example, Plug-in Hybrid Electric Vehicle (PHEV), Hybrid Electric Vehicle (HEV), Battery Electric Vehicle (BEV), or the like.

While described above, as a particular aspect of the herein disclosed technique, it is possible to use a recitation of each item described below.

### Item 1:

An electricity storage pack, comprising:
plural electric storage devices that comprise box-shaped cases and are aligned along a predetermined aligned direction;
a side frame that is arranged at an end part in the aligned direction; and
a cover that is arranged to cover the plural electric storage devices and at least a part of the side frame, and
further comprising:
a partition wall that is arranged between the side frame and the electric storage devices, that is formed in a plate shape, and that comprises a contact point configured to come into contact with the cover;
a first adhesion agent that is arranged at a surface on which the electric storage devices and the cover are opposed to each other; and a second adhesion agent that is arranged on an area in which the side frame, the partition wall, and the cover are opposed to each other and which is isolated from the first adhesion agent.

### Item 2:

The electricity storage pack recited in Item 1, wherein
an end part of the partition wall closer to the contact point is arranged between a surface of the box-shaped case of the electric storage device and the cover.

### Item 3:

The electricity storage pack recited in Item 1 or 2, wherein
the partition wall further comprises a bent part between the contact point and a portion at which the partition wall and the side frame come into contact with each other.

### Item 4:

The electricity storage pack recited in any one of Items 1 to 3, wherein
a thickness of the partition wall is at least equal to or more than 0.15 mm.

### Item 5:

The electricity storage pack recited in any one of Items 1 to 4, wherein
a viscosity of the first adhesion agent is equal to or less than 460 Pa·s.

### Item 6:

The electricity storage pack recited in any one of Items 1 to 5, wherein
a viscosity of the second adhesion agent is equal to or less than 460 Pa·s.

### Item 7:

The electricity storage pack recited in any one of Items 1 to 6, wherein
a width of the partition wall is wider than a width in which the first adhesion agent is provided.

### Item 8:

The electricity storage pack recited in any one of Items 1 to 7, wherein
the partition wall is attached to the side frame.

## Claims

1. An electricity storage pack (500), comprising:
plural electric storage devices (100) that comprise box-shaped cases (10) and are aligned along a predetermined aligned direction;
a side frame (220) that is arranged at an end part in the aligned direction; and
a cover (210) that is arranged to cover the plural electric storage devices (100) and at least a part of the side frame (220),
and further comprising:
a partition wall (350) that is arranged between the side frame (220) and the electric storage devices (100), that is formed in a plate shape, and that comprises a contact point (352) configured to come into contact with the cover (210);
a first adhesion agent (410) that is arranged at a surface on which the electric storage devices (100) and the cover (210) are opposed to each other; and
a second adhesion agent (420) that is arranged on an area (200b) in which the side frame (220), the partition wall (350), and the cover (210) are opposed to each other and which is isolated from the first adhesion agent (410).

2. The electricity storage pack (500) according to Claim 1, wherein
an end part (350a) of the partition wall (350) closer to the contact point (352) is arranged between a surface of the box-shaped case (10) of the electric storage device (100) and the cover (210).

3. The electricity storage pack (500) according to Claim 1 or 2, wherein
the partition wall (350) further comprises a bent part (354) between the contact point (352) and a portion at which the partition wall (350) and the side frame (220) come into contact with each other.

4. The electricity storage pack (500) according to any one of Claims 1 to 3, wherein
a thickness of the partition wall (350) is at least equal to or more than 0.15 mm.

5. The electricity storage pack (500) according to any one of Claims 1 to 4, wherein
a viscosity of the first adhesion agent (410) is equal to or less than 460 Pa·s.

6. The electricity storage pack (500) according to any one of Claims 1 to 5, wherein
a viscosity of the second adhesion agent (420) is equal to or less than 460 Pa·s.

7. The electricity storage pack (500) according to any one of Claims 1 to 6, wherein
a width of the partition wall (350) is wider than a width in which the first adhesion agent (410) is provided.

8. The electricity storage pack (500) according to any one of Claims 1 to 7, wherein
the partition wall (350) is attached to the side frame (220).
